# Europäisches Patentamt

# European Patent Office

# Office européen des brevets

(19)

(11) Veröffentlichungsnummer: **0 142 068**
**B1**

(12) # EUROPÄISCHE PATENTSCHRIFT

(45) Veröffentlichungstag der Patentschrift:
04.01.89

(51) Int. Cl.⁴: **B 62 B 7/08,** B 62 B 9/10

(21) Anmeldenummer: **84112660.0**

(22) Anmeldetag: **19.10.84**

(54) **Zusammenklappbarer Kinderwagen.**

(30) Priorität: **16.11.83 ES 275941**

(43) Veröffentlichungstag der Anmeldung:
**22.05.85 Patentblatt 85/21**

(45) Bekanntmachung des Hinweises auf die Patenterteilung:
**04.01.89 Patentblatt 89/1**

(84) Benannte Vertragsstaaten:
**BE CH DE FR GB IT LI NL**

(56) Entgegenhaltungen:
**FR-A-2 407 849**
**GB-A-2 120 609**
**US-A-3 799 567**

(73) Patentinhaber: **Jané Cabagnero, Ramon, 203 Cartagena Street, 08013 Barcelona (ES)**

(72) Erfinder: **Jané Cabagnero, Ramon, 203 Cartagena Street, 08013 Barcelona (ES)**

(74) Vertreter: **Kern, Wolfgang, Dipl.- Ing., Patentanwälte Kern, Brehm und Partner Albert-Rosshaupter- Strasse 73, D-8000 München 70 (DE)**

EP 0 142 068 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Kinderwagen zum Schieben oder Ziehen gemäß dem Oberbegriff des Anspruchs 1.

Diese Art Kinderwagen ist durch das Spanische Gebrauchsmuster Nr. 221 222 der Anmelderin geschützt, das durch die in dem Spanischen Gebrauchsmuster Nr. 222 387 beschriebene Konstruktion und später durch die Spanischen Geschmacksmuster Nr. 89 954 und 96 059 verbessert wurde. Dieser zusammenklappbare Kinderwagen bietet zwar den Kindern eine erhebliche Bequemlichkeit und läßt sich trotz seiner unterschiedlichen Teile auch zu einer kompakten Form zusammenfalten sowie leicht handhaben und tragen, jedoch läßt er, was seine Betriebssicherheit anbelangt, zu wünschen übrig.

Ferner ist aus der US-A-3 799 567 ein Zusammenklappbarer Kinderwagen der eingangs beschriebenen Art bekannt, der jedoch nur in Längsrichtung zusammenklappbar ist und bei dem das Zusammenklappen der Seitenteile problematisch ist.

Aufgabe der Erfindung ist es deshalb, einen zusammenklappbaren Kinderwagen zu schaffen, der sich zu einer kompakten Form zusammenfalten läßt und dabei eine bessere Sicherheit bei seiner Handhabung bietet.

Gelöst wird diese Aufgabe bei einem Kinderwagen der eingangs genannten Art durch die kennzeichnenden Merkmale des Anspruchs 1.

Der erfindungsgemäße Kinderwagen ist zusammenklappbar, wenn seine beiden Seiten aufeinander zubewegt werden. Diese Seiten sind ihrerseits an ihrem angelenkten Zwischenteil zusammenklappbar, welcher die Handgriffabzweigungen mit den Vorderbeinen verbindet. Der Sitzrahmen weist die Gelenkanordnung für den Sitzlehnenrahmen auf, der sich in verschiedenen Positionen durch Mittel feststellen läßt, die ihn mit dem Kinderwagenkörper verbinden.

Obwohl der zusammenklappbare Kinderwagen Armstützen und eine vordere Handschiene aufweist, die den Komfort steigern und gleichzeitig ein höheres Maß an Sicherheit für das Kind bieten, bleibt die leichte Zusammenklappbarkeit des Kinderwagens zu einem kompakten Gebilde erhalten.

Bei dem erfindungsgemäßen Kinderwagen sind die Armstützen hinter den zu dem Handgriff gehörenden Abzweigungen angelenkt, während sie an der Vorderseite durch entsprechende Zugstäbe mit den entsprechenden Vorderbeinen in Gelenkverbindung stehen. Diese Zugstäbe erstrecken sich an einer Stelle nach oben, wo eine vordere Handschiene angelenkt ist, die aus drei wechselseitig angelenkten Längenstücken besteht.

Die Erfindung wird nachfolgend anhand des in der Zeichnung dargestellten Ausführungsbeispiels näher erläutert. In der Zeichnung zeigt:

Fig. 1   eine Seitenansicht des Hauptteils des Kinderwagens, der mit den Armstützen und der Handschiene versehen ist,

Fig. 2   eine Draufsicht der Vorderseite des Kinderwagens und

Fig. 3   in einem kleineren Maßstab die Seitenansicht von Fig. 1 in einem halb zusammengeklappten Zustand des Kinderwagens.

Bei dem Kinderwagen sind die Abzweigungen 1 der Handgriffstange mit Hilfe eines Blocks 2 mit den entsprechenden Vorderbeinen 3 gelenkig verbunden. Diese Abzweigungen 1 weisen in einem mittleren Bereich einen festen Flansch 4 auf, an dem das entsprechende hintere Bein 5 angelenkt ist. Zwischen diesen Hinterbeinen und den Vorderbeinen sind die Seiten 6 des Sitzrahmens 7 in einem mittleren Bereich angelenkt. Diese Seiten sind mit entsprechenden Flanschen 8 versehen, wo die Seiten 9 des Sitzlehnenrahmens angelenkt sind. Die Anordnung aus Sitz und Sitzlehne wird von etwas flexiblen Seiten 10 gebildet, welche mit den Abzweigungen 1 der Handgriffstange verbunden sind.

An den Abzweigungen 1 der Handgriffstange befinden sich am unteren Ende entsprechende Armstützen 11, die dort mittels ihrer Rückseite angelenkt sind. Diese Armstützen bestehen aus einem gegossenen Plastikmaterialstück und sind an der Vorderseite mit den Vorderbeinen 3 über entsprechende Zugstäbe 12 gelenkig verbunden, welche unten an entsprechenden, feststehenden Tragplatten 13 angelenkt sind und mit der Gelenkwelle 14 zwischen diesen Beinen und den Seiten 6 des Sitzrahmens verbunden sind.

Diese Zugstangen 12 weisen einen Kopf auf, der sich von der Armstützenvorderseite 11 nach oben erstreckt, und an seinen Enden ist eine vordere Handschiene 16 angelenkt, die aus drei wechselseitig gelenkig verbundenen Längenstücken besteht und von einer elastischen und weichen Schutzhülle 17 bedeckt ist.

Um das Wohlbehagen des Kindes zu vergrößern, ist die Oberseite der Armstützen mit Polsterplatten 18 ausgestattet, die durch innere Niete befestigt sind, welche gleichzeitig die Sitzseiten 10 mit Hilfe eines Bandes 19 befestigen, wobei sie durch Biegung der Seiten ihr Zusammenfalten in die zusammengeklappte Lage des Kinderwagens ermöglichen, ohne daß durch das Strecken des eingebauten Stoffes oder Streifens irgendwelche Risse entstehen.

Diese Armstützen 11 sind an der Außenseite durch in geeigneter Weise geschmückte Platten 20 vervollständigt, die durch einfachen Druck angekoppelt werden, wenn gewisse Befestigungsmittel auf ihrer Rückseite mit entsprechenden Löchern in der entsprechenden Armstützenfläche verankert werden.

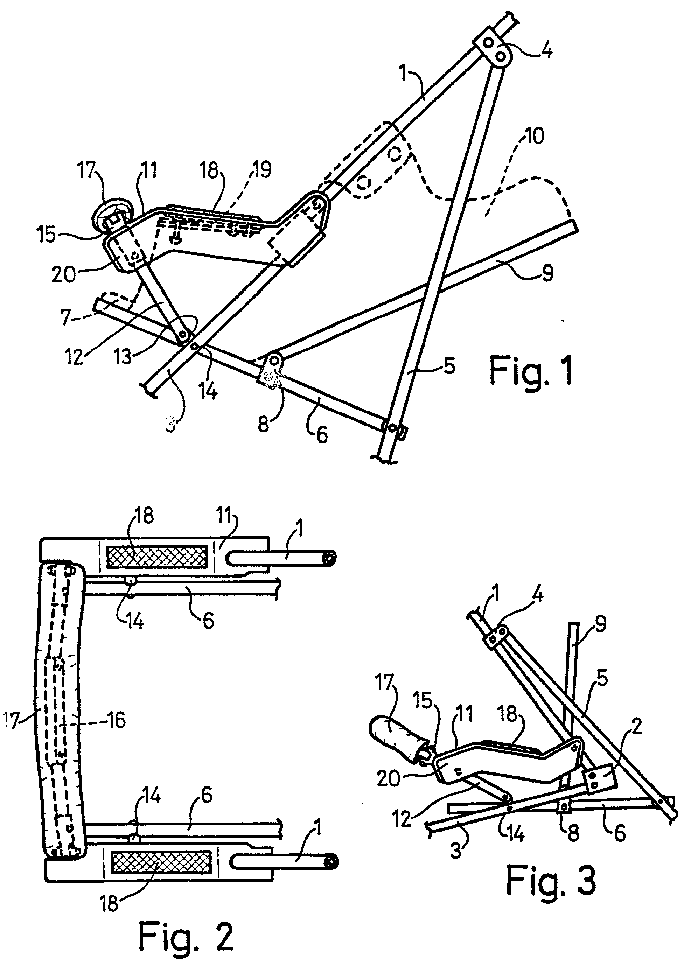

Es versteht sich somit, daß dieser Kinderwagen sich mit allen geeigneten Teilen oder Komponenten irgendeines Kinderwagens vervollständigen läßt, so beispielsweise die Einstellvorrichtung für jede Sitzrückenlehnenneigung, den angelenkten Rahmen für die beiden Seiten des Kinderwagens, der Blockier- und Sicherheitsvorrichtung für die auseinandergeklappte Stellung irgendeines Kinderwagens, ferner durch Räder, beispielsweise Zwillingsräder und durch selbstführende Vorderräder mit Blockiervorrichtung, um diese nur in einer Richtung laufen zu lassen, des weiteren durch Bremsen und Federn, eine Fußstütze, ein Dach, einen Fußschutz und andere geeignete und übliche Zubehörteile. Wie aus Fig. 3 hervorgeht, ermöglicht dieser allgemeine Aufbau des Kinderwagens auch, daß der Kinderwagen vollständig zusammenklappbar oder -faltbar ist, wobei er ein Minimum an Platz beansprucht, so daß Handhabung, Transport und Lagerung dieses Kinderwagens erheblich vereinfacht werden.

## Patentansprüche

1. Kinderwagen, bei dem die Abzweigungen der Handgriffstange (1) an den Vorderbeinen (3) angelenkt sind, wobei der Kinderwagen an jeder Seite eine Armstütze (11) und eine zwischen den Armstützen (11) angeordnete Handschiene (16) aufweist, dadurch gekennzeichnet, daß die Armstützen (11) an dem Handgriffstangenabzweig (1) angelenkt sind, und daß das vordere Ende der Armstütze (11) mit Hilfe einer Zugstange (12) mit dem Vorderbein (3) gelenkig verbunden ist, wobei das obere Ende der Zugstange (12) an der vorderen Handschiene (16) angelenkt ist.

2. Kinderwagen nach Anspruch 1, dadurch gekennzeichnet, daß die Oberseite der Armstütze (11) mit einer Polsterplatte (18) versehen ist.

3. Kinderwagen nach Anspruch 2, dadurch gekennzeichnet, daß die Polsterplatten (18) durch innere Nieten befestigt sind, die gleichzeitig die Sitzseiten (10) mit Hilfe eines Bandes (19) befestigen.

## Claims

1. Children's chair comprising hand-rod ends provided with branches pivotally connected at the front-legs (3), which children's chair having on each side an arm-rest (11) and a hand-rail (16) positioned between the arm-rests (11), characterized in that the arm-rests (11) are pivotally connected to the branche (1) of the hand-rod and that the front end of the arm-rest (11) is pivotally connected to the front-leg (3) by means of a tierod (12), wherein the upper end of the tierod (12) is connected to the front hand-rail (16).

2. Children's chair according to claim 1, characterized in that the upper side of the arm-rest (11) is provided with a polster plate (18).

3. Children's chair according to claim 2, characterized in that the polster plates (18) are fastened by inner rivets, which simultaneously connect the sides (10) of the seat by means of a strip (19).

## Revendications

1. Voiture d'enfant, dans laquelle les tubes formant poignées (1) sont reliés aux jambages avant (3) par des charnières articulées, chaque côté de la voiture d'enfant comportant des repose-bras (11) et, entre ces repose-bras (11), une barre d'appui (16) pour les mains, caractérisée en ce que les repose-bras (11) sont associés aux tubes (1) de manière articulée, et en ce que l'extrêmité avant des repose-bras (11) est assemblée à l'aide d'on tube (12) sur le jambage avant (3), de façon que ces éléments restent articulés l'un par rapport à l'autre, la partie supérieure du tube (12) étant retiée à la barre frontale (16) d'appui pour les mains.

2. Voiture d'enfant selon la revendication 1, caractérisée en ce que le dessus des repose-bras (11) comporte un matériau de rembourrage (18).

3. Voiture d'enfant selon la revendication 2, caractérisée en ce que le matériau de rembourrage (18) est fixé au moyen de rivets internes, qui fixent en même temps les côtés du siège (10) à l'aide d'une bande (19).

Fig. 1

Fig. 2

Fig. 3